# EUROPEAN PATENT APPLICATION

(11) **EP 4 303 868 A1**
(43) Date of publication of application: **10.01.2024**
(21) Application number: 22762433.5
(22) Date of filing: 24.02.2022
(51) Int. Cl.: G10L 17/18

(54) **AUDIO SIGNAL PROCESSING METHOD, DEVICES, SYSTEM, AND STORAGE MEDIUM**

(30) Priority: 03.03.2021 CN 202110235834
(71) Applicant: Alibaba (China) Co., Ltd., Binjiang District Hangzhou, Zhejiang 310052 (CN)
(72) Inventor: ZHENG, Siqi, Hangzhou, Zhejiang 310052 (CN); SUO, Hongbin, Hangzhou, Zhejiang 310052 (CN)
(74) Representative: Patentgruppen A/S
(86) International application number: PCT/CN2022/077742
(87) International publication number: WO 2022/183968

(57) **Abstract**

An audio signal processing method, system, terminal device, conference device, teaching device, intelligent vehicle-mounted device, server device, and computer-readable storage medium. The method comprises: obtaining current audio signals acquired by a microphone array, the microphone array comprising at least two microphones (101a); generating, according to phase difference information of the current audio signals acquired by the at least two microphones, current sound source spatial distribution information corresponding to the current audio signals (102a); and according to the current sound source spatial distribution information, in combination with the conversion relationship between single speech and overlapping speech learned on the basis of historical audio signals, identifying whether the current audio signals are overlapping speech (103a). Compared with single-channel audio, the audio signals acquired by the microphone array are used, and the sound source spatial distribution information is included, thus, the techniques of the present application accurately identify whether the current audio signals are overlapping speech, thereby satisfying the detection requirement for a product level.

## Description

### TECHNICAL FIELD

The present application relates to the technical field of audio processing, and, more particularly, to an audio signal processing method, device, system, and storage medium.

### BACKGROUND

A microphone array is a system including a certain number of microphones that samples and filters the spatial characteristics of a sound field. The microphone array has a strong suppression effect on far-field interference noise and may be applied to products with voice capture functions, such as pickups and recording pens, to accurately capture speech signals in various scenarios.

In some application scenarios, there may be both single-speaker situations and situations where multiple speakers are speaking simultaneously. A captured speech signal may include either a single speech signal or an overlapping speech signal where multiple speakers' speeches overlap. To accurately identify the number of speakers in a conference and their respective speech content, it is necessary to identify overlapping speech signals, and then perform voice recognition processing on the overlapping speech signals.

In the conventional techniques, an overlapping speech detection model may be obtained by training with a large amount of audio data, and whether an audio signal is an overlapping speech signal may be detected based on the detection model. However, existing overlapping speech detection is mostly based on single-channel audio. Directly applying existing overlapping speech detection technology to multi-channel audio scenarios using microphone arrays will reduce accuracy and fail to meet product-level detection requirements.

### SUMMARY

Various aspects of the present application provide an audio signal processing method, device, system, and storage medium to improve the accuracy of identifying whether a speech is an overlapping speech, thus meeting product-level detection requirements.

Embodiments of the present application provide an audio signal processing method, comprising: acquiring a current audio signal captured by a microphone array, wherein the microphone array comprises at least two microphones; generating spatial distribution information of a current sound source corresponding to the current audio signal based on phase difference information of the current audio signal captured by the at least two microphones; and identifying whether the current audio signal is an overlapping speech based on the spatial distribution information of the current sound source and in combination with a conversion relationship between a single speech and the overlapping speech learned from a historical audio signal.

Embodiments of the present application also provide an audio signal processing method applicable to a conference device, the conference device comprises a microphone array, and the method comprises: acquiring a current conference signal captured by the microphone array in a conference scenario, wherein the microphone array comprises at least two microphones; generating spatial distribution information of a current sound source corresponding to the current conference signal based on phase difference information of the current conference signal captured by the at least two microphones; and identifying whether the current conference signal is an overlapping speech based on the spatial distribution information of the current sound source and in combination with a conversion relationship between a single speech and the overlapping speech learned from a historical conference signal.

Embodiments of the present application also provide an audio signal processing method applicable to a teaching device, the teaching device comprises a microphone array, and the method comprises: acquiring a current classroom signal captured by the microphone array in a teaching environment, wherein the microphone array comprises at least two microphones; generating spatial distribution information of a current sound source corresponding to the current classroom signal based on phase difference information of the current classroom signal captured by the at least two microphones; and identifying whether the current classroom signal is an overlapping speech based on the spatial distribution information of the current sound source and in combination with a conversion relationship between a single speech and the overlapping speech learned from a historical classroom signal.

Embodiments of the present application also provide an audio signal processing method applicable to a smart vehicle-mounted device, the smart vehicle-mounted device comprises a microphone capture array, and the method comprises: acquiring a current audio signal captured by the microphone array in a vehicle-mounted environment, wherein the microphone array comprises at least two microphones; generating spatial distribution information of a current sound source corresponding to the current audio signal based on phase difference information of the current audio signal captured by the at least two microphones; identifying whether the current audio signal is an overlapping speech based on the spatial distribution information of the current sound source and in combination with a conversion relationship between a single speech and the overlapping speech learned from a historical audio signal.

Embodiments of the present application also provide a terminal device, comprising: a memory, a processor, and a microphone array; the memory is used for storing a computer program; the processor coupled to the memory is used to execute the computer program for: acquiring a current audio signal captured by a microphone array, wherein the microphone array comprises at least two microphones; generating spatial distribution information of a current sound source corresponding to the current audio signal based on phase difference information of the current audio signal captured by the at least two microphones; and identifying whether the current audio signal is an overlapping speech based on the spatial distribution information of the current sound source and in combination with a conversion relationship between a single speech and the overlapping speech learned from a historical audio signal. Embodiments of the present application also provide a conference device, comprising: a memory, a processor, and a microphone array; the memory is used for storing a computer program; the processor coupled to the memory is used to execute the computer program for: acquiring a current conference signal captured by the microphone array in a conference scenario, wherein the microphone array comprises at least two microphones; generating spatial distribution information of a current sound source corresponding to the current conference signal based on phase difference information of the current conference signal captured by the at least two microphones; identifying whether the current conference signal is an overlapping speech based on the spatial distribution information of the current sound source and in combination with a conversion relationship between a single speech and the overlapping speech learned from a historical conference signal.

Embodiments of the present application also provide a teaching device, comprising: a memory, a processor, and a microphone array; the memory is used for storing a computer program; the processor coupled to the memory is used to execute the computer program for: acquiring a current classroom signal captured by the microphone array in a teaching environment, wherein the microphone array comprises at least two microphones; generating spatial distribution information of a current sound source corresponding to the current classroom signal based on phase difference information of the current classroom signal captured by the at least two microphones; identifying whether the current classroom signal is an overlapping speech based on the spatial distribution information of the current sound source and in combination with a conversion relationship between a single speech and the overlapping speech learned from a historical classroom signal.

Embodiments of the present application also provide a smart vehicle-mounted device, comprising: a memory, a processor, and a microphone array; the memory is used for storing a computer program; the processor coupled to the memory is used to execute the computer program for: acquiring a current audio signal captured by the microphone array in a vehicle-mounted environment, wherein the microphone array comprises at least two microphones; generating spatial distribution information of a current sound source corresponding to the current audio signal based on phase difference information of the current audio signal captured by the at least two microphones; and identifying whether the current audio signal is an overlapping speech based on the spatial distribution information of the current sound source and in combination with a conversion relationship between a single speech and the overlapping speech learned from a historical audio signal.

Embodiments of the present application also provide an audio signal processing system, comprising: a terminal device and a server device. The terminal device comprises a microphone array, wherein the microphone array comprises at least two microphones, used for capturing the current audio signal. The terminal device is used for uploading the current audio signal captured by at least two microphones to the server device. The server device is used for generating spatial distribution information of a current sound source corresponding to the current audio signal based on phase difference information of the current audio signal captured by the at least two microphones; and identifying whether the current audio signal is an overlapping speech based on the spatial distribution information of the current sound source and in combination with a conversion relationship between a single speech and the overlapping speech learned from a historical audio signal.

Embodiments of the present application also provide a server device, comprising: a memory and a processor; the memory is used for storing a computer program; the processor coupled to the memory is used to execute the computer program for: receiving a current audio signal captured by at least two microphones in a microphone array uploaded by a terminal device; generating spatial distribution information of a current sound source corresponding to the current audio signal based on phase difference information of the current audio signal captured by the at least two microphones; and identifying whether the current audio signal is an overlapping speech based on the spatial distribution information of the current sound source and in combination with a conversion relationship between a single speech and the overlapping speech learned from a historical audio signal.

Embodiments of the present application further provide a computer-readable storage medium storing therein a computer program, wherein when the computer program is executed by a processor, the processor is enabled to implement steps in the audio signal processing methods provided by the embodiments of the present application.

Embodiments of the present application further provide a computer program product, comprising a computer program/instruction, wherein when the computer program/instruction is executed by a processor, the processor is enabled to implement steps in the audio signal processing methods provided by the embodiments of the present application.

According to the embodiments of the present application, an audio signal is captured by using a microphone array; spatial distribution information of a sound source corresponding to the audio signal is generated based on phase difference information of the audio signal captured by each microphone in the microphone array; and whether the current audio signal is an overlapping speech is identified based on the spatial distribution information of the sound source and in combination with a conversion relationship between a single speech and the overlapping speech learned from a historical audio signal. Compared with a single-channel audio, the audio signal captured by the microphone array contains the spatial distribution information of the sound source, so that the techniques of the present disclosure are able to accurately identify whether the current audio signal is an overlapping speech and meet the product-level detection requirements.

### BRIEF DESCRIPTION OF DRAWINGS

The accompanying drawings described herein are intended to provide a further understanding of the present application, and constitute a part of the present application. The illustrative embodiments of the present application and the descriptions thereof are used to explain the present application, and do not constitute an improper limitation to the present application. In the drawings:
FIG. 1a is a schematic flow chart of an audio signal processing method provided by an exemplary embodiment of the present application;
FIG. 1b is a schematic flow chart of another audio signal processing method provided by an exemplary embodiment of the present application;
FIG. 2a is a schematic diagram of a microphone layout in a microphone array provided by an exemplary embodiment of the present application;
FIG. 2b is a schematic diagram of peak information of sound source spatial distribution information provided by an exemplary embodiment of the present application;
FIG. 3a is a schematic diagram of a usage state of a conference device in a conference scenario;
FIG. 3b is a schematic diagram of a usage state of a sound pickup device in a business cooperation negotiation scenario;
FIG. 3c is a schematic diagram of a usage state of a teaching device in a teaching scenario;
FIG. 3d is a schematic diagram of a usage state of a smart vehicle-mounted device in a vehicle-mounted environment;
FIG. 3e is a schematic flow chart of another audio signal processing method provided by an exemplary embodiment of the present application;
FIG. 3f is a schematic flow chart of another audio signal processing method provided by an exemplary embodiment of the present application;
FIG. 3g is a schematic flow chart of another audio signal processing method provided by an exemplary embodiment of the present application;
FIG. 4 is a schematic structural diagram of an audio signal processing system provided by an exemplary embodiment of the present application;
FIG. 5 is a schematic structural diagram of a terminal device provided by an exemplary embodiment of the present application; and
FIG. 6 is a schematic structural diagram of a server device provided in an exemplary embodiment of the present application.

### DESCRIPTION OF EMBODIMENTS

In order to make the objectives, technical solutions, and advantages of the present application clearer, the technical solutions of the present application will be clearly and completely described below in conjunction with the specific embodiments of the present application and the corresponding accompanying drawings. Obviously, the described embodiments are only a part, not all, of the embodiments of the present application. Based on the embodiments in the present application, all other embodiments obtained by ordinary persons skilled in the art without creative efforts shall fall within the protection scope of the present application.

The technical solutions provided by various embodiments of the present application will be described in detail below in conjunction with the accompanying drawings.

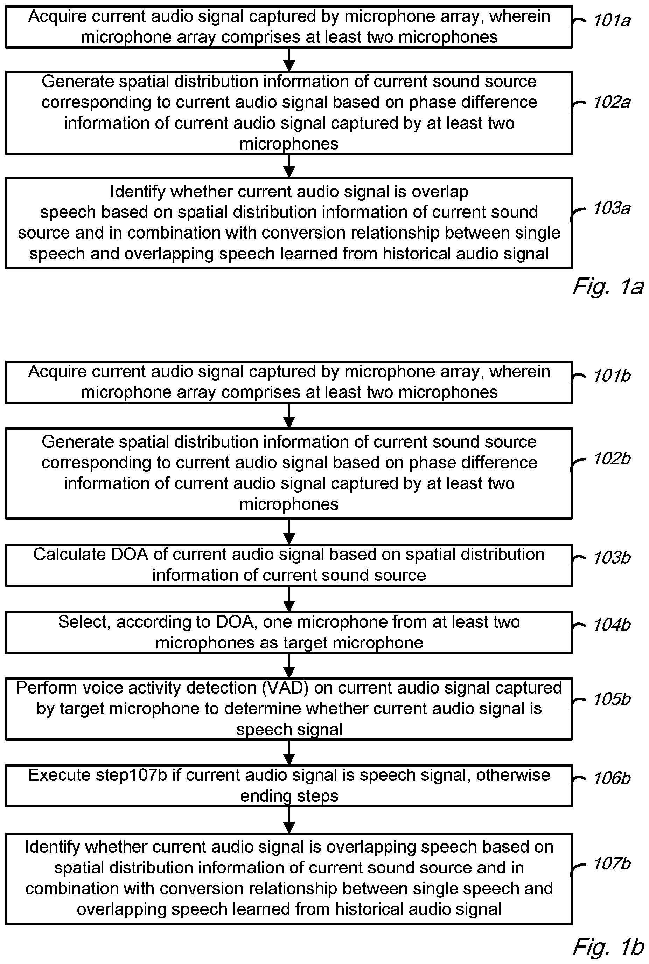

FIG. 1a is a schematic flow chart of an audio signal processing method provided by an exemplary embodiment of the present application; as shown in FIG. 1a, the method includes:
101a. acquiring a current audio signal captured by a microphone array, wherein the microphone array comprises at least two microphones;
102a. generating spatial distribution information of a current sound source corresponding to the current audio signal based on phase difference information of the current audio signal captured by the at least two microphones;
103a. identifying whether the current audio signal is an overlapping speech based on the spatial distribution information of the current sound source and in combination with a conversion relationship between a single speech and the overlapping speech learned from a historical audio signal.

In this embodiment, a sound source refers to an object that can generate sound through vibration, such as musical instruments, vibrating tuning forks, human vocal organs (e.g., vocal cords), or animal vocal organs. Sound sources can produce speech, which refers to sounds with social meaning emitted by human vocal organs. Microphone arrays can capture audio signals emitted by sound sources, which may contain speech or other sounds, such as reverberation, echo, environmental noise, animal cries, or object collision noises.

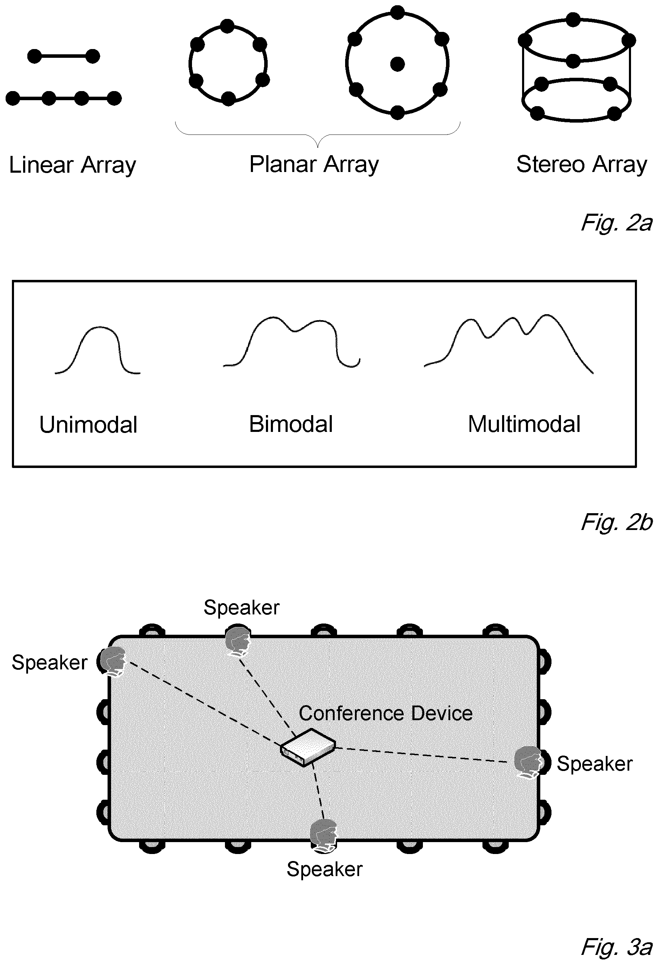

In this embodiment, the microphone array includes at least two microphones. The layout of the at least two microphones is not limited and can be a linear, planar, or stereo array, as shown in FIG. 2a. Due to the certain layout of the microphones in the microphone array, the same audio signal will arrive at each microphone at different times, creating a delay. This delay can be reflected as a phase difference when the same audio signal arrives at each microphone, which is referred to as phase difference.

In this embodiment, during the process of the microphone array capturing audio signals, phenomena such as "interrupting" may occur at any time depending on an application scenario. This means that one speaker may interrupt another, and the current audio signal captured by the microphone array could be a single speech produced by one speaker or an overlapping speech that overlaps speeches from multiple speakers. In this embodiment, it is assumed that audio signals exist in two states: single speech and overlapping speech.

In this embodiment, the phase difference information of the current audio signal captured by the microphones in the microphone array is used to determine the state of the audio signal, i.e., whether it is single speech or overlapping speech, or whether it is overlapping speech. Among them, the phase difference information can reflect the spatial distribution of sound source positions to a certain extent, and the number and positions of effective sound sources can be identified according to the spatial distribution of sound source positions. In the case of identifying the number of effective sound sources, it is possible to determine whether the audio signal is an overlapping speech.

Specifically, the current audio signal captured by the microphone array can be acquired, with no limit to the length of the audio signal segmentation, and the signal frame can be used as the unit. The current audio signal can be a signal frame, and each signal frame is usually on the millisecond level (e.g., 20ms), which is usually shorter than the duration of a single word or syllable in speech. Alternatively, several consecutive signal frames can also be used as the current audio signal, with no limitation on this. Next, based on the phase difference information of the current audio signal captured by at least two microphones in the microphone array, the spatial distribution information of the current sound source corresponding to the current audio signal is generated. The spatial distribution information of the current sound source reflects the spatial distribution of the current sound source. Based on the spatial distribution of the current sound source, the number and positions of effective sound sources can be identified. In the case of identifying the number of effective sound sources, it is possible to determine whether the audio signal is an overlapping speech.

In practical applications, in view of the continuity of an audio signal, there is a certain regularity in the conversion from one state to another. For example, the state of the current audio signal may be related to the state corresponding to the previous audio signal, or to the state corresponding to the previous two or previous N (N > 2) audio signals. Based on this, under the initialization probability of single speech and overlapping speech, the conversion relationship between single speech and overlapping speech is continuously learned based on the state of historical audio signals. The conversion relationship refers to the probability of the conversion between the states corresponding to the audio signal, including the probability of the conversion between single speech and single speech, the probability of the conversion between single speech and overlapping speech, the probability of the conversion between overlapping speech and single speech, and the probability of the conversion between overlapping speech and overlapping speech. Based on the above, when determining whether the current audio signal is an overlapping signal, by relying upon the conversion relationship between single speech and overlapping speech that has been learned, and combining with the spatial distribution information of the current sound source, whether the current audio signal is an overlapping signal can be identified. Compared with single-channel audio, the audio signal captured by the microphone array contains the spatial distribution information of the sound source, so that it can accurately identify whether the audio signal at any time is overlapping speech, meeting product-level detection requirements.

In this embodiment, the phase difference information can reflect the spatial distribution of the sound source position to a certain extent. In order to better reflect the spatial distribution of the sound source position, in some optional embodiments of the present application, the wave arrival spectrogram of the current audio signal can be calculated based on the phase difference information of the current audio signal captured by at least two microphones. The wave arrival spectrogram can reflect the spatial distribution of the current sound source.

Further optionally, for any orientation in a position space, the phase difference information of the current audio signal captured by any two microphones can be accumulated to obtain the probability of each orientation as the current sound source position. Based on the probability of each orientation in the position space being the current sound source position, the wave arrival spectrogram corresponding to the current audio signal can be generated. Specifically, a sound source localization algorithm based on Steered Response Power-PHAse Transform (SRP-PHAT) can be used to obtain the probability of each orientation being the current sound source position. The basic principle of the SRP-PHAT algorithm is: assuming any orientation in the position space is the orientation of the sound source, the microphone array captures the audio signal from the sound source at this orientation. Using the Generalized Cross Correlation-PHAse Transformation (GCC-PHAT) algorithm, the cross-correlation function between the audio signals captured by any two microphones is calculated, and the cross-power spectral density function of the cross-correlation function is weighted. Then, the GCC-PHAT values between all pairs of any two microphones calculated are accumulated to obtain the SRP-PHAT value corresponding to any orientation. Further, based on the SRP-PHAT value corresponding to any orientation, the probability of each orientation as the current sound source position can be obtained. Based on the probability of each orientation in the position space as the current sound source position, the wave arrival spectrogram corresponding to the current audio signal can be generated. For example, the SRP-PHAT value corresponding to each orientation can be directly used as the probability of each orientation as the current sound source position, and each orientation and its corresponding SRP-PHAT value can be recorded in the wave arrival spectrogram. The larger the SRP-PHAT value, the greater the probability that the orientation corresponding to the SRP-PHAT value is the orientation of the sound source. Furthermore, the ratio of the SRP-PHAT value in each orientation to the sum of the SRP-PHAT values in all orientations can be used as the probability of each orientation as the current sound source position. The wave arrival spectrogram can directly reflect the probability of each orientation being the current sound source position.

In an optional embodiment, a Hidden Markov Model (HMM) can be used to identify whether the current audio signal is overlapping speech. Specifically, the state of the audio signal, that is, single speech and overlapping speech, can be used as two hidden states of the HMM. The peak information of the spatial distribution of the current sound source of the audio signal can be calculated as the observation state of the HMM. Optionally, the Kurtosis algorithm or the Excessive Mass algorithm can be used to calculate the peak information of the spatial distribution of the current sound source. Among them, the peak information can be the number of peaks, as shown in FIG. 2b, which represents three forms of peak information, or three forms of observation states, namely unimodal, bimodal, and multimodal.

In this embodiment, after the observation state is calculated for the current audio signal, the current observation state can be input into the HMM. By combining the jump relationship learned by the HMM between the two hidden states, the probability of the current observation state corresponding to the hidden state can be calculated, given the historical observation states as preconditions. Specifically, the initialization probability of the hidden state can be set. For example, it could be 0.6 for single speech and 0.4 for overlapping speech. With the initialization probabilities of the hidden states set, the conversion relationship between the hidden states and the emission relationship from the hidden states to the observation states can be continuously learned based on the historical state of the audio signal, so as to obtain the HMM model. After the observation state is input into the HMM model, the HMM model outputs the probability that the current observation state is the hidden state, given the historical observation states as preconditions. For example, if the historical observation states are five consecutive unimodal states, and the HMM model identifies the hidden state corresponding to five consecutive historical observation states as a single speech, then under the premise of five consecutive unimodal observation states, if the current observation state is a bimodal observation state, the HMM model outputs the probability that the current observation state is overlapping speech or single speech respectively, and the probability that the current observation state is overlapping speech is greater than the probability that the current observation state is single speech.

In this embodiment, after the HMM model outputs the probability that the current observation state corresponds to the hidden state, it can be identified whether the current audio signal is overlapping speech according to the probability that the current observation state corresponds to the hidden state. If the probability that the current observation state corresponds to overlapping speech is greater than the probability that the current observation state corresponds to single speech, then the current audio signal is considered to be an overlapping speech; if the probability that the current observation state corresponds to overlapping speech is less than or equal to the probability that the current observation state corresponds to single speech, the current audio signal is considered to be single speech.

In an optional embodiment, if the current audio signal is identified as overlapping speech, at least two effective sound source orientations can be determined based on the spatial distribution information of the current sound source. For example, when the spatial distribution information of the current sound source includes the probability of each orientation being the current sound source position, the two orientations with the maximum probabilities can be considered as the effective sound source orientations. For another example, if the spatial distribution information of the current sound source is represented by the wave arrival spectrogram, which includes the SRP-PHAT value of each orientation, then the two orientations with the largest SRP-PHAT values can be selected from the wave arrival spectrogram as an effective sound source orientation. Next, speech enhancement may be performed on audio signals in at least two effective sound source orientations. Specifically, Beam Forming (BF) technology may be used to form beams on audio signals in effective sound source orientations. This beam can effectively enhance the audio signals, and suppress the audio signals from orientations other than the effective sound source orientations, thereby achieving the effect of speech separation. On this basis, speech recognition is performed on the enhanced audio signals at the at least two effective sound source orientations separately, which can improve the accuracy of speech recognition and enhance the user experience.

In another optional embodiment, if the current audio signal is identified as single speech, then the orientation with the maximum probability of being the current sound source position is considered as the effective sound source orientation. Speech enhancement is performed on the audio signal in this effective sound source orientation, and speech recognition is performed on the enhanced audio signal in this effective sound source orientation. The implementation of speech enhancement for single speech is the same as or similar to the implementation of speech enhancement for overlapping speech in the above embodiments, and will not be repeated here.

In some application scenarios of the present application, such as conference scenarios, teacher teaching scenarios, or business cooperation negotiation scenarios, it is often necessary to recognize speech signals. For non-speech signals, such as environmental noise, animal cries, or object collision noises, they are less concerned. Based on this, before identifying whether the current audio signal is overlapping speech, it is also possible to determine whether the current audio signal is a speech signal. If the current audio signal is not a speech signal, it is not necessary to recognize this current audio signal, so as to improve the efficiency of audio processing. If the current audio signal is a speech signal, then identify whether the current audio signal is overlapping speech.

Based on the above, the embodiment of the present application also provides an audio signal processing method; as shown in FIG. 1b, the method includes:
101b. acquiring the current audio signal captured by the microphone array, wherein the microphone array comprises at least two microphones;
102b. generating spatial distribution information of a current sound source corresponding to the current audio signal based on phase difference information of the current audio signal captured by the at least two microphones;
103b. calculating the DOA of the current audio signal based on the spatial distribution information of the current sound source;
104b. selecting, according to the DOA, one microphone from the at least two microphones as a target microphone;
105b. performing voice activity detection (VAD) on the current audio signal captured by the target microphone to determine whether the current audio signal is a speech signal;
106b. proceeding to step 107b if the current audio signal is a speech signal; otherwise, the processing of the current audio signal ends;
107b. identifying whether the current audio signal is an overlapping speech based on the spatial distribution information of the current sound source and in combination with a conversion relationship between a single speech and the overlapping speech learned from a historical audio signal.

In this embodiment, the contents of steps 101b, 102b, and 107b can be referred to the detailed contents of steps 101a, 102a, and 103a in the previous embodiments, and are not repeated here.

In this embodiment, the DOA of the current audio signal is calculated based on the spatial distribution information of the current sound source. The DOA refers to the direction angle at which the current audio signal reaches the microphone array. The DOA may be the same as or different from the direction angle of each microphone in the microphone array receiving the audio signal, which is specifically related to the layout of the microphones. In the case where the sound source spatial distribution information includes the probability of each orientation being the current sound source position, the orientation with the maximum probability of being the current sound source position can be directly used as the DOA, or the orientation that is at a set angle from the orientation with the maximum probability of being the current sound source position can be used as the DOA, which is not limited.

After the DOA is calculated, one microphone can be selected from at least two microphones as the target microphone according to the DOA. For example, the direction angle of each microphone receiving the current audio signal can be calculated, the direction angle consistent with the DOA can be selected from multiple direction angles, and the microphone corresponding to this direction angle can be taken as the target microphone. After the target microphone is determined, voice activity detection (VAD) may be performed on the current audio signal captured by the target microphone to determine whether the current audio signal is a speech signal. The basic principle of VAD is to accurately locate start and end points of the speech signal from the audio signal with noise, thereby determining whether the current audio signal is a speech signal. That is, if the start and end points of the speech signal can be detected from the audio signal, it is considered that the audio signal is a speech signal. If the start and end points of the speech signal cannot be detected from the audio signal, it is considered that the audio signal is not a speech signal.

It should be noted that in this embodiment, there is no restriction on the implementation of VAD on the current audio signal captured by the target microphone. In an optional embodiment, the current audio signal captured by the target microphone can be subjected to VAD using a software VAD function. The software VAD function refers to implementing a VAD function through software, and there is no restriction on the software that implements the VAD function, such as a Neural Network-VAD (NN-VAD) model trained by a human voice model. In another optional embodiment, a hardware VAD function can be used to perform VAD on the current audio signal captured by the target microphone. The hardware VAD function refers to implementing the VAD function through a built-in VAD module on a voice chip or device. The VAD module can be solidified on the voice chip, and the VAD function can be modified by configuring parameters.

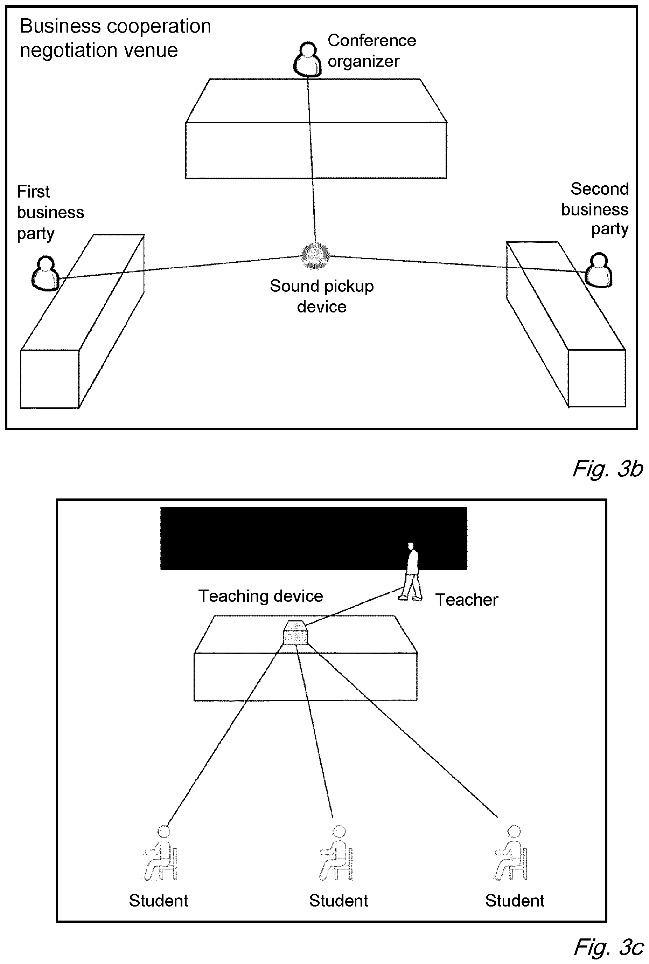

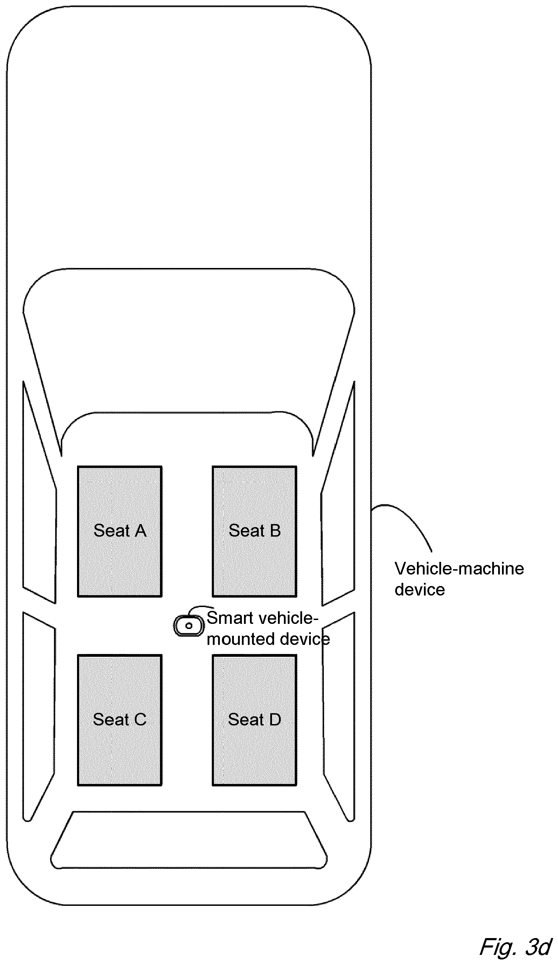

The audio signal processing method provided in this embodiment can be applied to various multi-person speaking scenarios, such as multi-person conference scenarios, court trial scenarios, or teaching scenarios. In these application scenarios, the terminal device of this embodiment will be deployed in these scenarios to capture audio signals in the application scenarios, and implement other functions described in the method embodiments mentioned above and the system embodiments described below. The terminal device can be implemented as sound pickup devices such as recording pens, recording bars, tape recorders, or pickups, or as terminal devices with recording functions, such as conference devices, teaching devices, robots, smart set-top boxes, smart TVs, smart speakers, and smart vehicle-mounted devices. For better capture results and to facilitate the recognition of whether the audio signal is overlapping speech, and further, to enhance a speech and recognize the speech based on whether the audio signal is overlapping speech, the placement location of the terminal device can be reasonably determined according to the specific deployment situation of the multi-person speaking scenario. As shown in FIG. 3a, in a multi-person conference scenario, the terminal device is exemplified as a conference device, the conference device includes a microphone array and has a sound pickup function. Considering that multiple speakers are distributed in different orientations of the conference device, it is preferable to deploy the conference device in the center of the conference table. As shown in FIG. 3b, in a business cooperation negotiation scenario, the terminal device is exemplified as a sound pickup device. The first business party and the second business party sit opposite each other, and the conference organizer is located between the first business party and the second business party, responsible for organizing negotiations between the two parties. The sound pickup device is deployed at the central position of the conference organizer, the first business party, and the second business party, and the first business party, the second business party, and the conference organizer are located in different orientations of the sound pickup device, facilitating the sound pickup device to pick up sound. As shown in FIG. 3c, in a teaching scenario, the terminal device is exemplified as a teaching device, which is deployed on the lecture table, and the teacher and students are located in different orientations of the teaching device, facilitating the simultaneous pickup of the teacher's and students' voices. As shown in FIG. 3d, in the vehicle-mounted scenario, the terminal device is implemented as a smart vehicle-mounted device on a vehicle-machine device. The smart vehicle-mounted device is located in the center of the car, and the passengers on seats A, B, C, and D are located in different orientations of the smart vehicle-mounted device, facilitating the pickup of different passengers' voices.

The following provides detailed explanations of the audio and video signal processing processes in different application scenarios.

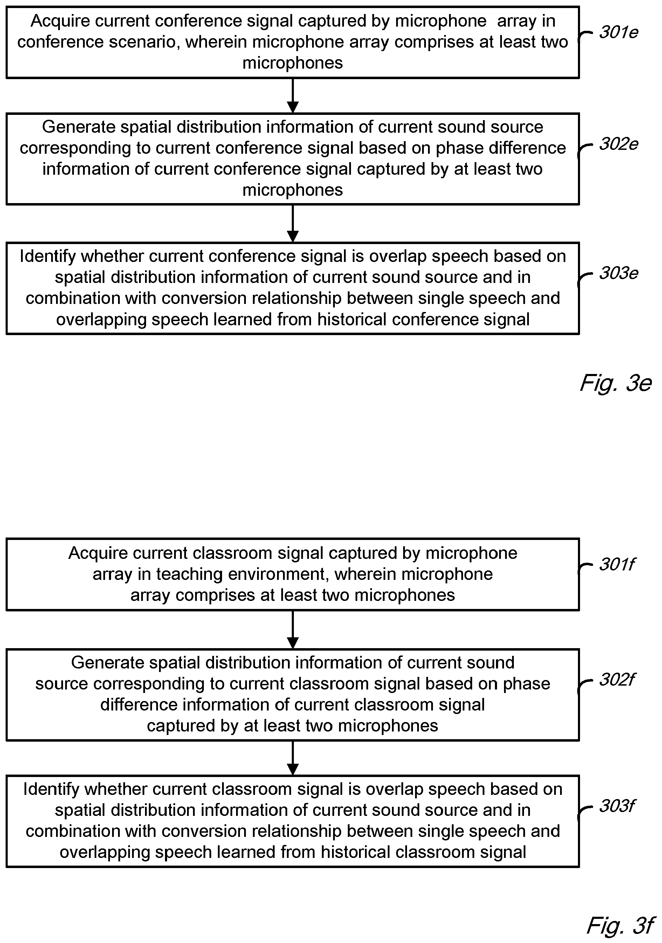

For the conference scenario shown in FIG. 3a, the embodiment of the present application provides an audio signal processing method, which is applicable to a conference device; as shown in FIG. 3e, the method includes:
301e. acquiring a current conference signal captured by a microphone array in a conference scenario, wherein the microphone array comprises at least two microphones;
302e. generating spatial distribution information of a current sound source corresponding to the current conference signal based on phase difference information of the current conference signal captured by the at least two microphones;
303e. identifying whether the current conference signal is an overlapping speech based on the spatial distribution information of the current sound source and in combination with a conversion relationship between a single speech and the overlapping speech learned from a historical conference signal.

For the content of steps 301e to 303e, please refer to the embodiments shown in FIG. 1a and FIG. 1b above, and they will not be further detailed here.

For the teaching scenario shown in FIG. 3c, the embodiment of the present application provides an audio signal processing method, applicable to a teaching device; as shown in FIG. 3f, the method includes:
301f. acquiring a current classroom signal captured by a microphone array in a teaching environment, wherein the microphone array comprises at least two microphones;
302f. generating spatial distribution information of a current sound source corresponding to the current classroom signal based on phase difference information of the current classroom signal captured by the at least two microphones;
303f. identifying whether the current classroom signal is an overlapping speech based on the spatial distribution information of the current sound source and in combination with a conversion relationship between a single speech and the overlapping speech learned from a historical classroom signal.

For the content of steps 301f to 303f, please refer to the embodiments shown in FIG. 1a and FIG. 1b above, and they will not be further detailed here.

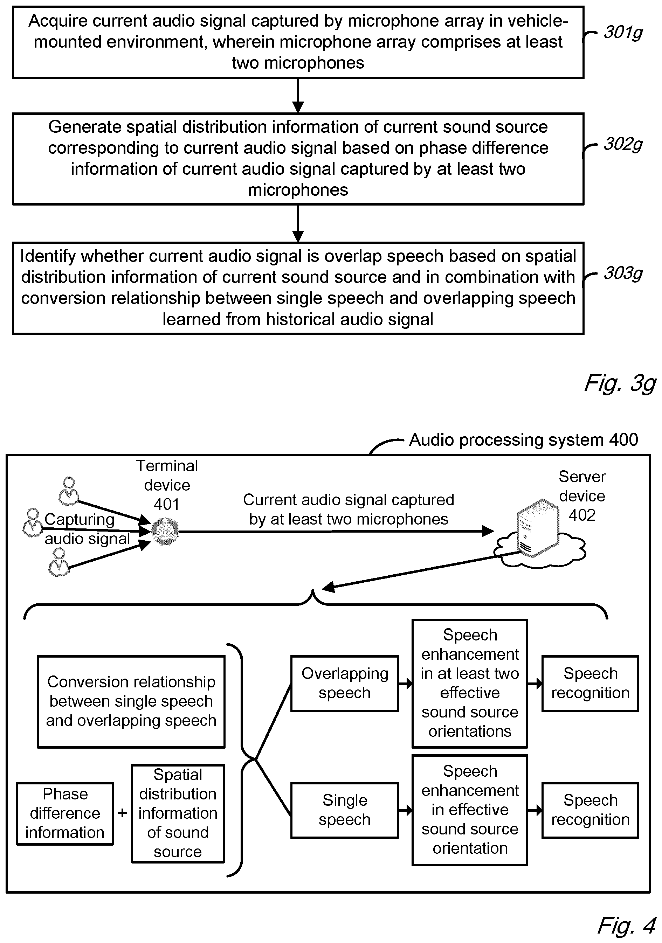

For the vehicle-mounted scenario shown in FIG. 3d, the embodiment of the present application provides an audio signal processing method, which is applicable to smart vehicle-mounted devices; as shown in FIG. 3g, the method includes:
301g. acquiring a current audio signal captured by a microphone array in a vehicle-mounted environment, wherein the microphone array comprises at least two microphones;
302g. generating spatial distribution information of a current sound source corresponding to the current audio signal based on phase difference information of the current audio signal captured by the at least two microphones;
303g. identifying whether the current audio signal is an overlapping speech based on the spatial distribution information of the current sound source and in combination with a conversion relationship between a single speech and the overlapping speech learned from a historical audio signal.

For the content of steps 301g to 303g, please refer to the embodiments shown in FIG. 1a and FIG. 1b above, and they will not be further detailed here.

It should be noted that the methods provided by the embodiments of the present application may be fully implemented by the terminal device, or part of the functions may be implemented on the server device, which is not limited. Based on this, this embodiment provides an audio signal processing system, which explains the process of the joint implementation of the audio signal processing method based on the terminal device and the server device. As shown in FIG. 4, the audio signal processing system 400 includes: a terminal device 401 and a server device 402. The audio signal processing system 400 can be applied to multi-person speech scenarios, such as the multi-person conference scenario shown in FIG. 3a, the business cooperation negotiation scenario shown in FIG. 3b, the teaching scenario shown in FIG. 3c, and the vehicle-mounted environment shown in FIG. 3d. In these scenarios, the terminal device 401 can cooperate with the server device 402 to implement the above-mentioned method embodiments of the present application, and the server device 402 is not shown in the multi-person speech scenarios shown in FIGs. 3a-3d.

The terminal device 401 in this embodiment has functional modules such as a power-on button, an adjustment button, a microphone array, and a loudspeaker, wherein the microphone array includes at least two microphones, and further optionally, it can also include a display screen. The terminal device 401 can realize functions such as automatic recording, MP3 playback, FM frequency modulation, digital camera function, telephone recording, timing recording, external transcription, repeater, or editing. As shown in FIG. 4, the terminal device 401 can use at least two microphones in the microphone array to capture the current audio signal, and upload the current audio signal captured by the at least two microphones to the server device 402; the server device 402 receives the current audio signals captured by at least two microphones, generates spatial distribution information of a current sound source corresponding to the current audio signal based on phase difference information of the current audio signal captured by the at least two microphones; and identifies whether the current audio signal is overlapping speech according to the current sound source spatial distribution information, combined with the conversion relationship between single speech and overlapping speech learned from historical audio signals.

In some optional embodiments of the present application, if the server device 402 recognizes that the current audio signal is overlapping speech, it determines at least two effective sound source orientations according to the current sound source spatial distribution information; performs speech enhancement on the audio signals in the at least two effective sound source orientations, and performs speech recognition on the enhanced audio signals in the at least two effective sound source orientations respectively. Further optionally, when the current sound source spatial distribution information includes the probability of each orientation being the current sound source position, the two orientations with the maximum probabilities can be considered as the effective sound source orientations.

In some optional embodiments of the present application, if the current audio signal is identified as single speech by the server device 402, then the orientation with the maximum probability of being the current sound source position can be considered as the effective sound source orientation. Speech enhancement can be performed on the audio signal in this effective sound source orientation, and speech recognition can be performed on the enhanced audio signal in this effective sound source orientation.

It should be noted that when the audio signal processing system is applied to different scenarios, the implementation form of the terminal device varies. For example, in a conference scenario, the terminal device is realized as a conference device; in the business cooperation negotiation scenario, the terminal device is realized as a sound pickup device; in the teaching scenario, the terminal device is realized as a teaching device; in the vehicle-mounted environment, the terminal device is realized as a smart vehicle-mounted device.

It should be noted that the execution body in each step of the method provided in the embodiment may be the same device, or the method may use different devices as execution bodies. For example, the execution body of steps 101a to 103a can be device A; for another example, the execution body of steps 101a and 102a can be device A, and the execution body of step 103a can be device B; and so on.

In addition, in some of the processes described in the above embodiments and accompanying drawings, multiple operations appear in a specific order, but it should be clearly understood that these operations can be executed not in the order they appear in this document or executed in parallel. The operation numbers, such as 101a and 102a, are just used to distinguish different operations, and the numbers themselves do not represent any execution order. In addition, these processes may include more or fewer operations, and these operations may be performed sequentially or in parallel.

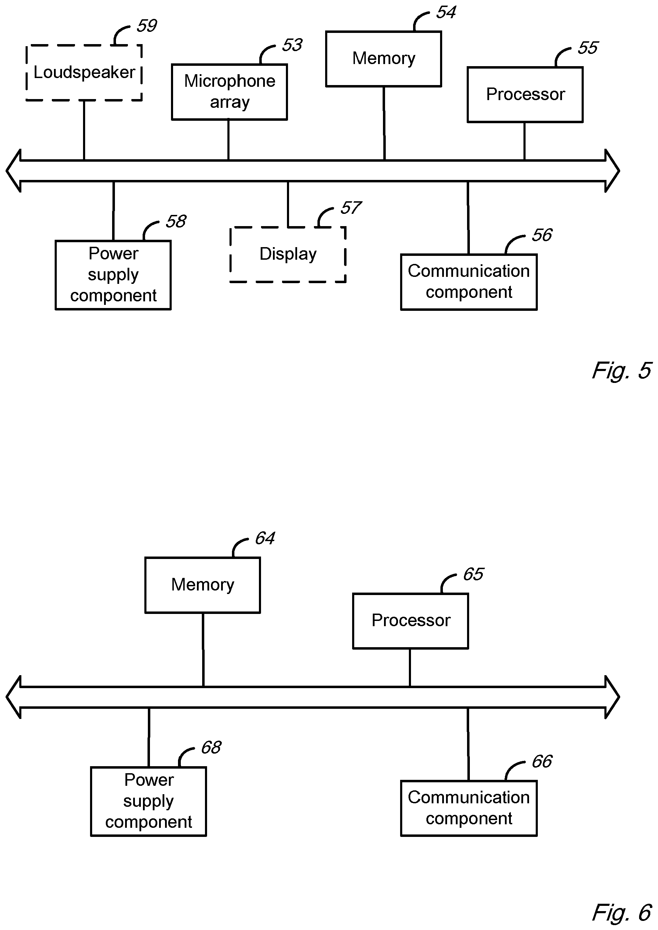

FIG. 5 is a schematic structural diagram of a terminal device provided by an exemplary embodiment of the present application. As shown in FIG. 5, the terminal device includes: a microphone array 53, a memory 54, and a processor 55.

The memory 54 is used to store computer programs, and can be configured to store other various data to support operations on the terminal device. Examples of such data include instructions for any application or method operating on the terminal device.

The memory 54 may be implemented by any type of volatile or non-volatile memory device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The processor 55 coupled to the memory 54 is used to execute the computer program in the memory 54 for: acquiring a current audio signal captured by a microphone array 53, wherein the microphone array 53 comprises at least two microphones; generating spatial distribution information of a current sound source corresponding to the current audio signal based on phase difference information of the current audio signal captured by the at least two microphones; identifying whether the current audio signal is an overlapping speech based on the spatial distribution information of the current sound source and in combination with a conversion relationship between a single speech and the overlapping speech learned from a historical audio signal.

In an optional embodiment, when the processor 55 generates spatial distribution information of a current sound source corresponding to the current audio signal based on phase difference information of the current audio signal captured by the at least two microphones, it specifically involves: calculating a wave arrival spectrogram corresponding to the current audio signal based on the phase difference information of the current audio signal captured by the at least two microphones, the wave arrival spectrogram reflecting the spatial distribution of the current sound source.

In an optional embodiment, when the processor 55 calculates the wave arrival spectrogram corresponding to the current audio signal based on the phase difference information of the current audio signal captured by at least two microphones, it specifically involves: for any orientation in the position space, accumulating the phase difference information of the current audio signal captured by any two microphones to get the probability of the orientation as the current sound source position; and generating the wave arrival spectrogram corresponding to the current audio signal is according to the probability of each orientation in the position space as the current sound source position.

In an optional embodiment, when the processor 55 identifies whether the current audio signal is an overlapping speech based on the spatial distribution information of the current sound source and in combination with the conversion relationship between single speech and overlapping speech learned from the historical audio signal, it specifically involves: calculating the peak information of the spatial distribution information of the current sound source as the current observation state of the Hidden Markov Model (HMM), and taking single speech and overlapping speech as two hidden states of HMM; inputting the current observation state into HMM, and combining the jump relationship between the two hidden states learned by HMM to calculate the probability of the hidden state corresponding to the current observation state under the precondition of historical observation state; recognizing whether the current audio signal is overlapping speech according to the probability of the hidden state corresponding to the current observation state.

In an optional embodiment, the processor 55 is further used for: if the current audio signal is identified as overlapping speech, determining at least two effective sound source orientations according to the current sound source spatial distribution information; enhancing the audio signals in the at least two effective sound source orientations, and recognizing the enhanced audio signals in the at least two effective sound source orientations respectively.

In an optional embodiment, when the processor 55 determines at least two effective sound source orientations based on the current sound source spatial distribution information, it specifically involves: in the case where the current sound source spatial distribution information includes the probability of each orientation as the current sound source position, the two orientations with the maximum probability as the current sound source position are taken as the effective sound source orientations.

In an optional embodiment, the processor 55 is also used for: if the current audio signal is identified as single speech, the orientation with the maximum probability as the current sound source position is taken as the effective sound source orientation; the audio signal on the effective sound source orientation is enhanced, and the enhanced audio signal on the effective sound source orientation is recognized.

In an optional embodiment, before the processor 55 identifies whether the current audio signal is overlapping speech, it is also used for: calculating the wave arrival direction of the current audio signal according to the current sound source spatial distribution information; selecting one microphone as the target microphone from at least two microphones according to the wave arrival direction; performing voice activity detection (VAD) on the current audio signal captured by the target microphone to determine whether the current audio signal is a speech signal.

In an optional embodiment, the terminal device is a conference device, a sound pickup device, a robot, a smart set-top box, a smart TV, a smart speaker, and a smart vehicle-mounted device.

The terminal device provided by the embodiments of the present application can capture an audio signal by using a microphone array, generate spatial distribution information of a sound source corresponding to the audio signal based on phase difference information of the audio signal captured by each microphone in the microphone array, and identify whether the current audio signal is an overlapping speech based on the spatial distribution information of the sound source and in combination with a conversion relationship between a single speech and the overlapping speech learned from a historical audio signal. Compared with a single-channel audio, the audio signal captured by the microphone array contains the spatial distribution information of the sound source, so that it is able to accurately identify whether the current audio signal is an overlapping speech and meet product-level detection requirements.

Further, as shown in FIG. 5, the terminal device further includes: a communication component 56, a display 57, a power supply component 58, a loudspeaker 59, and other components. FIG. 5 only schematically shows some components, which does not mean that the terminal device only includes the components shown in FIG. 5. It should be noted that the components in the dotted line box in FIG. 5 are optional components, not mandatory components, which can be specifically determined according to a product form of the terminal device.

In an optional embodiment, the foregoing terminal device can be applied to different application scenarios, and when applied to different application scenarios, it is specifically implemented in different device forms.

For example, the terminal device may be implemented as a conference device, and the structure of this conference device is the same as or similar to the structure of the terminal device shown in FIG. 5, which can be implemented with reference to the structure of the terminal device shown in FIG. 5. The main difference between the conference device and the terminal device in the embodiment shown in FIG. 5 lies in that the functions implemented by the computer program stored in the memory and executed by the processor are different. For the conference device, the computer program stored in its memory, when executed by its processor, can be used for: acquiring a current conference signal captured by a microphone array in a conference scenario, wherein the microphone array comprises at least two microphones; generating spatial distribution information of a current sound source corresponding to the current conference signal based on phase difference information of the current conference signal captured by the at least two microphones; identifying whether the current conference signal is an overlapping speech based on the spatial distribution information of the current sound source and in combination with a conversion relationship between a single speech and the overlapping speech learned from a historical conference signal.

Similarly, the terminal device can be implemented as a teaching device. The implementation structure of the teaching device is the same as or similar to the implementation structure of the terminal device shown in FIG. 5 and can be implemented with reference to the structure of the terminal device shown in FIG. 5. The main difference between the teaching device and the terminal device in the embodiment shown in FIG. 5 lies in the different functions implemented by the computer program stored in the memory and executed by the processor. For the teaching device, the computer program stored in its memory, when executed by its processor, can be used for: acquiring a current classroom signal captured by a microphone array in a teaching environment, wherein the microphone array comprises at least two microphones; generating spatial distribution information of a current sound source corresponding to the current classroom signal based on phase difference information of the current classroom signal captured by the at least two microphones; identifying whether the current classroom signal is an overlapping speech based on the spatial distribution information of the current sound source and in combination with a conversion relationship between a single speech and the overlapping speech learned from a historical classroom signal.

In another example, the terminal device can be implemented as a smart vehicle-mounted device. The implementation structure of the smart vehicle-mounted device is the same as or similar to the implementation structure of the terminal device shown in FIG. 5, and can be implemented with reference to the structure of the terminal device shown in FIG. 5. The main difference between the smart vehicle-mounted device and the terminal device in the embodiment shown in FIG. 5 lies in the different functions implemented by the computer program stored in the memory and executed by the processor. For the smart vehicle-mounted device, the computer program stored in its memory, when executed by its processor, can be used for: acquiring a current audio signal captured by a microphone array in a vehicle-mounted environment, wherein the microphone array comprises at least two microphones; generating spatial distribution information of a current sound source corresponding to the current audio signal based on phase difference information of the current audio signal captured by the at least two microphones; identifying whether the current audio signal is an overlapping speech based on the spatial distribution information of the current sound source and in combination with a conversion relationship between a single speech and the overlapping speech learned from a historical audio signal.

Correspondingly, the embodiment of the present application also provides a computer-readable storage medium storing a computer program, which, when executed by a processor, enables the processor to implement each step in the method embodiments provided by the present application.

Correspondingly, the embodiments of the present application also provide a computer program product, including a computer program/instruction, which, when executed by a processor, enables the processor to implement the steps in the methods provided by the present application.

FIG. 6 is a schematic structural diagram of a server device provided in an exemplary embodiment of the present application. As shown in FIG. 6, the server device includes: a memory 64 and a processor 65.

The memory 64 is used to store computer programs, and can be configured to store other various data to support operations on the server device. Examples of such data include instructions for any application or method operating on the server device.

The memory 64 may be implemented by any type of volatile or non-volatile memory device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The processor 65 coupled to the memory 64 is used to execute the computer program in the memory 64 for: receiving a current audio signal captured by at least two microphones in a microphone array, uploaded by a terminal device; generating spatial distribution information of a current sound source corresponding to the current audio signal based on phase difference information of the current audio signal captured by the at least two microphones; identifying whether the current audio signal is an overlapping speech based on the spatial distribution information of the current sound source and in combination with a conversion relationship between a single speech and the overlapping speech learned from a historical audio signal.

In an optional embodiment, when the processor 65 generates spatial distribution information of a current sound source corresponding to the current audio signal based on phase difference information of the current audio signal captured by the at least two microphones, it specifically involves: calculating a wave arrival spectrogram corresponding to the current audio signal based on the phase difference information of the current audio signal captured by the at least two microphones, the wave arrival spectrogram reflecting the spatial distribution of the current sound source.

In an optional embodiment, when the processor 65 calculates the wave arrival spectrogram corresponding to the current audio signal based on the phase difference information of the current audio signal captured by at least two microphones, it specifically involves: for any orientation in the position space, accumulating the phase difference information of the current audio signal captured by any two microphones to get the probability of the orientation as the current sound source position; and generating a wave arrival spectrogram corresponding to the current audio signal according to the probability of each orientation in the position space as the current sound source position.

In another optional embodiment, when the processor 65 uses the current sound source spatial distribution information and the conversion relationship learned from the historical audio signal between single speech and overlapping speech to identify whether the current audio signal is overlapping speech, it specifically involves: calculating peak information of the current sound source spatial distribution information as the current observation state of the Hidden Markov Model (HMM), and taking single speech and overlapping speech as two hidden states of HMM; inputting the current observation state into HMM, and combining the jump relationship learned by HMM between the two hidden states to calculate the probability of the hidden state corresponding to the current observation state under the precondition of historical observation state; recognizing whether the current audio signal is overlapping speech according to the probability of the hidden state corresponding to the current observation state.

In an optional embodiment, the processor 65 is further used for: if the current audio signal is identified as overlapping speech, determining at least two effective sound source orientations according to the current sound source spatial distribution information; enhancing the audio signals in the at least two effective sound source orientations, and recognizing the enhanced audio signals in the at least two effective sound source orientations respectively.

In an optional embodiment, when the processor 65 determines at least two effective sound source orientations based on the current sound source spatial distribution information, it specifically involves: in the case where the current sound source spatial distribution information includes the probability of each orientation as the current sound source position, the two orientations with the maximum probability as the current sound source position are taken as the effective sound source orientations.

In an optional embodiment, the processor 65 is also used for: if the current audio signal is identified as single speech, the orientation with the maximum probability as the current sound source position is taken as the effective sound source orientation; the audio signal on the effective sound source orientation is enhanced, and the enhanced audio signal on the effective sound source orientation is recognized.

In an optional embodiment, before the processor 65 identifies whether the current audio signal is overlapping speech, it is also used for: calculating the wave arrival direction of the current audio signal according to the current sound source spatial distribution information; selecting one microphone as the target microphone from at least two microphones according to the wave arrival direction; performing voice activity detection (VAD) on the current audio signal captured by the target microphone to determine whether the current audio signal is a speech signal.

The server device provided by the embodiments of the present application can capture an audio signal by using a microphone array, generate spatial distribution information of a sound source corresponding to the audio signal based on phase difference information of the audio signal captured by each microphone in the microphone array, and identify whether the current audio signal is an overlapping speech based on the spatial distribution information of the sound source and in combination with a conversion relationship between a single speech and the overlapping speech learned from a historical audio signal. Compared with a single-channel audio, the audio signal captured by the microphone array contains the spatial distribution information of the sound source, so that it is able to accurately identify whether the current audio signal is an overlapping speech and meet product-level detection requirements.

Further, as shown in FIG. 6, the server device further includes: a communication component 66, a power supply component 68, and other components. FIG. 6 only schematically shows some components, which does not mean that the server device only includes the components shown in FIG. 6. It should be noted that the components in the dotted line box in FIG. 6 are optional components, not mandatory components, which can be specifically determined according to a product form of the server device.

Correspondingly, the embodiment of the present application also provides a computer-readable storage medium storing a computer program, which, when executed by a processor, enables the processor to implement each step in the method embodiments provided by the present application.

Correspondingly, the embodiments of the present application also provide a computer program product, including a computer program/instruction, which, when executed by a processor, enables the processor to implement the steps in the methods provided by the present application.

Communication components shown in FIG. 5 and FIG. 6 are configured to facilitate wired or wireless communications between devices on which the communication components are arranged and other devices. The device on which the communication components are arranged may access wireless networks based on communication standards, such as mobile communication networks like WiFi, 2G, 3G, 4G/LTE, and 5G, or combinations thereof. In an exemplary embodiment, the communication components receive, through a broadcast channel, broadcast signals or broadcast-related information from an external broadcast management system. In an exemplary embodiment, the communication components further comprise a near field communication (NFC) module to facilitate short range communications. For example, the NFC module can be implemented based on the radio frequency identifier (RFID) technology, the infrared data association (IrDA) technology, the ultra-wideband (UWB) technology, the Bluetooth (BT) technology, and other technologies.

The display shown in FIG. 5 includes a screen, which may include a liquid crystal display (LCD) and a touch panel (TP). If the screen includes the touch panel, the screen may be implemented as a touch screen to receive input signals from a user. The touch panel includes one or more touch sensors to sense touch, swiping, and gestures on the touch panel. The touch sensor may not only sense the boundary of a touch or swipe action, but also detect the duration and pressure related to the touch or swipe operation.

In FIG. 5 and FIG. 6, the power supply components provide power for various components of the device on which the power supply components are arranged. The power supply components may include a power management system, one or more power supplies, and other components associated with generating, managing, and distributing power for the device on which the power supply components are arranged.

Those skilled in the art should understand that the embodiments of the present application may be provided as a method, a system, or a computer program product. Therefore, the present application may take a form of an entirely hardware embodiment, an entirely software embodiment, or an embodiment combining software and hardware elements. Furthermore, the present invention may take the form of a computer program product which is embodied on one or more computer-usable storage media (including, but not limited to, disk storage, CD-ROM, optical storage, and so forth) having computer-usable program code included therein.

The present application is described with reference to flow charts and/or block diagrams of methods, devices (systems), and computer program products according to embodiments of the present application. It should be understood that computer program instructions may be used to implement each process and/or each block in the flow charts and/or the block diagrams and a combination of a process and/or a block in the flow charts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flow charts and/or in one or more blocks in the block diagrams.

These computer program instructions may also be stored in a computer readable memory that can instruct the computer or another programmable data processing device to work in a specific manner, so that the instructions stored in the computer readable memory generate an artifact that includes an instruction apparatus. The instruction apparatus implements a specific function in one or more processes in the flow charts and/or in one or more blocks in the block diagrams.

These computer program instructions may also be loaded onto a computer or another programmable data processing device, so that a series of operation steps are performed on the computer or another programmable device to generate computer-implemented processing. Therefore, the instructions executed on the computer or another programmable device are used to provide steps for implementing a specific function in one or more processes in the flow charts and/or in one or more blocks in the block diagrams.

In a typical configuration, a computing device includes one or more processors (CPU), an input/output interface, a network interface, and a memory.

The memory may include a volatile memory on a computer-readable medium, a random access memory (RAM) and/or a non-volatile memory, and the like, such as a read-only memory (ROM) or a flash random access memory (flash RAM). The memory is an example of the computer-readable media.

Computer-readable media further include nonvolatile and volatile, removable and non-removable media employing any method or technique to achieve information storage. The information may be computer readable instructions, data structures, modules of programs, or other data. Examples of computer storage media include, but are not limited to, a phase-change random access memory (PRAM), a static random access memory (SRAM), a dynamic random access memory (DRAM), other types of random access memories (RAM), a read-only memory (ROM), an electrically erasable programmable read-only memory (EEPROM), a flash memory or other memory technologies, a compact disc read-only memory (CD-ROM), a digital versatile disc (DVD) or other optical memories, a magnetic cassette tape, a magnetic tape, a magnetic disk storage or other magnetic memories or any other non-transmission medium, which may be used to store information that can be accessed by a computing device. As defined herein, the computer-readable media do not include transitory media, such as modulated data signals and carriers.

It should be further noted that the terms "include," "comprise," or any other variants thereof are intended to encompass non-exclusive inclusion, so that a process, method, product, or device that involves a series of elements comprises not only those elements, but also other elements not explicitly listed, or elements that are inherent to such a process, method, product, or device. Unless more limitations are stated, an element defined by the phrase "including a ..." does not exclude the existence of another identical element in the process, method, product, or device that includes the element.

The above are merely embodiments of the present application and are not intended to limit the present application. For those skilled in the art, there may be various modifications and changes to the present application. Any modification, equivalent substitution, improvement, etc. made within the spirit and principle of the present application shall be deemed as falling within the scope of the claims of the present application.

## Claims

1. An audio signal processing method, comprising:
acquiring a current audio signal captured by a microphone array, wherein the microphone array comprises at least two microphones;
generating spatial distribution information of a current sound source corresponding to the current audio signal based on phase difference information of the current audio signal captured by the at least two microphones; and
identifying whether the current audio signal is an overlapping speech based on the spatial distribution information of the current sound source and in combination with a conversion relationship between a single speech and the overlapping speech learned from a historical audio signal.

2. The method according to claim 1, wherein the generating spatial distribution information of a current sound source corresponding to the current audio signal based on phase difference information of the current audio signal captured by the at least two microphones comprises:
calculating a wave arrival spectrogram corresponding to the current audio signal based on the phase difference information of the current audio signal captured by the at least two microphones, wherein the wave arrival spectrogram reflects spatial distribution of the current sound source.

3. The method according to claim 2, wherein the calculating a wave arrival spectrogram corresponding to the current audio signal based on the phase difference information of the current audio signal captured by the at least two microphones comprises:
accumulating the phase difference information of the current audio signal captured by any two microphones for any orientation in a position space, to obtain a probability of the orientation being a position of the current sound source; and
generating the wave arrival spectrogram corresponding to the current audio signal based on a probability of each orientation in the position space being a position of the current sound source.

4. The method according to any one of claims 1-3, wherein the identifying whether the current audio signal is an overlapping speech based on the spatial distribution information of the current sound source and in combination with a conversion relationship between a single speech and the overlapping speech learned from a historical audio signal comprises:
calculating peak information of the spatial distribution information of the current sound source as a current observation state of a Hidden Markov model (HMM), and taking the single speech and the overlapping speech as two hidden states of the HMM;
inputting the current observation state into the HMM and, in conjunction with a jump relationship between the two hidden states learned by the HMM, calculating a probability of a hidden state corresponding to the current observation state by taking a historical observation state as a precondition; and
identifying whether the current audio signal is an overlapping speech based on the probability of the hidden state corresponding to the current observation state.

5. The method according to any one of claims 1-3, further comprising:
if the current audio signal is identified as an overlapping speech, determining at least two effective sound source orientations based on the spatial distribution information of the current sound source; and
performing speech enhancement on audio signals in the at least two effective sound source orientations, and performing speech recognition on the enhanced audio signals in the at least two effective sound source orientations respectively.

6. The method according to claim 5, wherein the determining at least two effective sound source orientations based on the spatial distribution information of the current sound source comprises:
when the spatial distribution information of the current sound source comprises a probability of each orientation being a position of the current sound source, taking two orientations with the maximum probabilities being the positions of the current sound source as effective sound source orientations.

7. The method according to claim 6, further comprising:
if the current audio signal is identified as a single speech, considering the orientation with the maximum probability being the position of the current sound source as the effective sound source orientation;
performing speech enhancement on the audio signal in the effective sound source orientation, and performing speech recognition on the enhanced audio signal in the effective sound source orientation.

8. The method according to any one of claims 1-3, wherein before identifying whether the current audio signal is the overlapping speech, the method further comprises:
calculating a direction of arrival (DOA) of the current audio signal based on the spatial distribution information of the current sound source;
selecting, according to the DOA, one microphone from the at least two microphones as a target microphone; and
performing voice activity detection (VAD) on the current audio signal captured by the target microphone to obtain whether the current audio signal is a speech signal.

9. An audio signal processing method, **characterized by** being applicable to a conference device, wherein the conference device comprises a microphone array, and the method comprises:
acquiring a current conference signal captured by the microphone array in a conference scenario, wherein the microphone array comprises at least two microphones;
generating spatial distribution information of a current sound source corresponding to the current conference signal based on phase difference information of the current conference signal captured by the at least two microphones; and
identifying whether the current conference signal is an overlapping speech based on the spatial distribution information of the current sound source and in combination with a conversion relationship between a single speech and the overlapping speech learned from a historical conference signal.

10. An audio signal processing method, **characterized by** being applicable to a teaching device, wherein the teaching device comprises a microphone array, and the method comprises:
acquiring a current classroom signal captured by the microphone array in a teaching environment, wherein the microphone array comprises at least two microphones;
generating spatial distribution information of a current sound source corresponding to the current classroom signal based on phase difference information of the current classroom signal captured by the at least two microphones; and
identifying whether the current classroom signal is an overlapping speech based on the spatial distribution information of the current sound source and in combination with a conversion relationship between a single speech and the overlapping speech learned from a historical classroom signal.

11. An audio signal processing method, **characterized by** being applicable to a smart vehicle-mounted device, wherein the smart vehicle-mounted device comprises a microphone capture array, and the method comprises:
acquiring a current audio signal captured by the microphone array in a vehicle-mounted environment, wherein the microphone array comprises at least two microphones;
generating spatial distribution information of a current sound source corresponding to the current audio signal based on phase difference information of the current audio signal captured by the at least two microphones; and
identifying whether the current audio signal is an overlapping speech based on the spatial distribution information of the current sound source and in combination with a conversion relationship between a single speech and the overlapping speech learned from a historical audio signal.

12. A terminal device, comprising: a memory, a processor, and a microphone array, wherein
the memory is used to store computer programs;
the processor coupled to the memory is used to execute the computer programs for: acquiring a current audio signal captured by the microphone array, wherein the microphone array comprises at least two microphones; generating spatial distribution information of a current sound source corresponding to the current audio signal based on phase difference information of the current audio signal captured by the at least two microphones; identifying whether the current audio signal is an overlapping speech based on the spatial distribution information of the current sound source and in combination with a conversion relationship between a single speech and the overlapping speech learned from a historical audio signal.

13. The terminal device according to claim 12, wherein the terminal device refers to a conference device, a sound pickup device, a robot, a smart set-top box, a smart TV, a smart speaker, and a smart vehicle-mounted device.

14. A conference device, comprising: a memory, a processor, and a microphone array, wherein
the memory is used to store computer programs;
the processor coupled to the memory is used to execute the computer programs for: acquiring a current conference signal captured by the microphone array in a conference scenario, wherein the microphone array comprises at least two microphones; generating spatial distribution information of a current sound source corresponding to the current conference signal based on phase difference information of the current conference signal captured by the at least two microphones; identifying whether the current conference signal is an overlapping speech based on the spatial distribution information of the current sound source and in combination with a conversion relationship between a single speech and the overlapping speech learned from a historical conference signal.

15. A teaching device, comprising: a memory, a processor, and a microphone array, wherein
the memory is used to store computer programs;
the processor coupled to the memory is used to execute the computer programs for: acquiring a current classroom signal captured by the microphone array in a teaching environment, wherein the microphone array comprises at least two microphones; generating spatial distribution information of a current sound source corresponding to the current classroom signal based on phase difference information of the current classroom signal captured by the at least two microphones; identifying whether the current classroom signal is an overlapping speech based on the spatial distribution information of the current sound source and in combination with a conversion relationship between a single speech and the overlapping speech learned from a historical classroom signal.

16. A smart vehicle-mounted device, comprising: a memory, a processor, and a microphone array, wherein
the memory is used to store computer programs;
the processor coupled to the memory is used to execute the computer programs for: acquiring a current audio signal captured by the microphone array in a vehicle-mounted environment, wherein the microphone array comprises at least two microphones; generating spatial distribution information of a current sound source corresponding to the current audio signal based on phase difference information of the current audio signal captured by the at least two microphones; identifying whether the current audio signal is an overlapping speech based on the spatial distribution information of the current sound source and in combination with a conversion relationship between a single speech and the overlapping speech learned from a historical audio signal.

17. An audio signal processing system, comprising: a terminal device and a server device, wherein the terminal device comprises a microphone array, and the microphone array comprises at least two microphones, used for capturing a current audio signal; the terminal device is configured to upload the current audio signal captured by the at least two microphones to the server device;
the server device is configured for generating spatial distribution information of a current sound source corresponding to the current audio signal based on phase difference information of the current audio signal captured by the at least two microphones; identifying whether the current audio signal is an overlapping speech based on the spatial distribution information of the current sound source and in combination with a conversion relationship between a single speech and the overlapping speech learned from a historical audio signal.

18. A server device, comprising: a memory and a processor, wherein
the memory is used to store computer programs;
the processor coupled to the memory is used to execute the computer programs for:
receiving a current audio signal captured by at least two microphones in a microphone array uploaded by a terminal device; generating spatial distribution information of a current sound source corresponding to the current audio signal based on phase difference information of the current audio signal captured by the at least two microphones; identifying whether the current audio signal is an overlapping speech based on the spatial distribution information of the current sound source and in combination with a conversion relationship between a single speech and the overlapping speech learned from a historical audio signal.

19. A computer-readable storage medium storing therein a computer program, wherein when the computer program is executed by a processor, the processor is enabled to implement steps of the methods according to any one of claims 1-11.

20. A computer program product, comprising computer programs/instructions, wherein when the computer programs/instructions are executed by a processor, the processor is enabled to implement steps of the methods according to any one of claims 1-11.
